# FASCICULE DE BREVET EUROPEEN

(11) **EP 3 652 038 B1**
(45) Date de publication et mention de la délivrance du brevet: **06.07.2022**
(21) Numéro de dépôt: 18742965.9
(22) Date de dépôt: 10.07.2018
(51) Int. Cl.: B60W 50/14, G06K 9/00, G05D 1/00, G02F 1/1347, B60J 1/02

(54) **VÉHICULE ROUTIER ET MÉTHODE DE RÉENGAGEMENT DE LA CONDUITE MANUELLE**
STRASSENFAHRZEUG UND VERFAHREN ZUR WIEDERAUFNAHME DER MANUELLEN FAHRT
ROAD VEHICLE AND METHOD FOR REENGAGING MANUAL DRIVING

(30) Priorité: 11.07.2017 FR 1756574
(43) Date de publication de la demande: 20.05.2020
(73) Titulaire: Université Gustave Eiffel, 77420 Champs-Sur-Marne (FR)
(72) Inventeur: BELLET, Thierry, 69001 Lyon (FR)
(74) Mandataire: Lavoix
(86) Numéro de dépôt international: PCT/EP2018/068686
(87) Numéro de publication internationale: WO 2019/011924

(56) Documents cités:
- DE-A1-102013 213 600
- DE-A1-102014 009 985
- DE-A1-102014 226 188
- US-A1- 2015 094 899

## Description

La présente invention concerne un véhicule routier et une méthode de réengagement de la conduite manuelle mise en œuvre à l'aide d'un tel véhicule routier.

L'invention se rapporte au domaine des véhicules routiers, notamment de type automobile, autobus, camion, ou deux-roues, préférentiellement pour un usage civil ou professionnel. De préférence, l'invention ne concerne pas des applications militaires.

Le progrès de la technique encourage le développement de véhicules routiers capables d'être partiellement ou totalement autonomes dans des situations de manœuvre ou de circulation sur un système routier. Dans le cas où un véhicule de ce type est apte à circuler sous le contrôle total d'un automate, la personne conductrice peut se voir retirer temporairement la qualité de conductrice et devenir simple passagère pendant que l'automate conduit le véhicule.

Certaines situations sont susceptibles d'imposer un désengagement de l'automate de la conduite du véhicule, et un réengagement simultané de la personne conductrice pour prendre le relai de la conduite du véhicule. Il peut s'agir de situations d'urgence, de situations dans lesquelles la mise en œuvre de l'automate est moins appropriée, moins efficace ou moins sécuritaire que celle de la personne conductrice, ou encore de situations dans lesquelles il est nécessaire de faire appel à une décision de la personne conductrice, par exemple sur une direction à faire prendre au véhicule routier.

Un passage brusque du mode de conduite automatique au mode de conduite manuelle pourrait s'avérer dangereux, dans la mesure où la personne conductrice, en toute confiance de la conduite automatique, présente un état amoindri de concentration et de conscience de l'environnement extérieur du véhicule, par rapport à une situation dans laquelle la même personne conductrice serait responsable de la conduite du véhicule.

Il a ainsi été envisagé de prévoir, immédiatement avant de basculer en conduite manuelle, une phase de réengagement de la conduite d'une durée de quelques secondes, dans laquelle la personne conductrice est avertie par un signal qu'elle doit se préparer à la reprise de la conduite.

Cependant, en fonction des personnes soumises à cette phase de réengagement, le temps de concentration et de réappropriation de l'environnement extérieur du véhicule peut être variable en durée. De plus, il existe un risque que la personne conductrice reprenne la conduite manuelle sur la base d'informations erronées liées à une mauvaise perception, ou à un préjugé erroné de la situation construit avant la reprise de la conduite manuelle.

DE 10 2014 009985 A1 décrit un véhicule routier qui présente, pour la conduite, un mode de conduite assistée, dans lequel le conducteur assure la conduite avec l'aide d'un système d'assistance de conduite, un mode de conduite partiellement automatique, dans lequel le système d'assistance de conduite assure la conduite sous la supervision du conducteur, et un mode de conduite hautement automatique, dans laquelle le système d'assistance de conduite assure la conduite sans supervision. En mode hautement automatisé, l'affichage diffère nettement de celui du mode manuel, pour que le mode automatisé soit signalé au conducteur. Certains contenus essentiels peuvent alors être affichés sur un écran, par exemple des panneaux et interdictions pertinents, tels qu'une limitation de vitesse ou une interdiction de dépassement. Lorsque le véhicule passe du mode de conduite hautement automatisé au mode de conduite partiellement automatisé, l'affichage d'une vidéo de la scène de conduite courante peut être insérée sur un afficheur après émission d'un avertissement sonore.

Par conséquent, l'invention vise à fournir un nouveau véhicule routier qui offre un réengagement d'un mode manuel de conduite particulièrement sécuritaire et de durée particulièrement réduite.

L'objet de l'invention est défini à la revendication 1.

Une idée à la base de l'invention est de s'inspirer du fonctionnement naturel du système cognitif humain lorsque celui-ci construit une représentation mentale correspondant à sa conscience de l'environnement extérieur du véhicule routier, c'est-à-dire de la scène de conduite, qui est préférentiellement une scène routière, ou peut encore être désignée situation de conduite, dans laquelle le véhicule routier se trouve. Il s'agit d'encadrer et de faciliter ce processus cognitif de construction, en soumettant la personne conductrice, pendant la phase de réengagement du mode manuel, à différents éléments visuels, notamment l'image réelle masquée de l'environnement extérieur, la représentation symbolique de l'environnement extérieur, puis l'image réelle non masquée.

Une idée à la base de l'invention est, pendant la phase de réengagement, d'avoir une période de temps, au début de la phase de réengagement, au cours de laquelle la perception de l'environnement extérieur par la personne conductrice est réinitialisée, par masquage temporaire de l'image réelle de l'environnement, sur la base de laquelle la personne conductrice est supposée construire sa perception de l'environnement extérieur. En d'autres termes, grâce au masquage, la perception mentale de la personne conductrice, concernant l'environnement extérieur, est « remise à zéro ». Cela permet, le cas échéant, d'ôter de l'esprit de la personne conductrice tout préjugé erroné, ou toute représentation mentale préexistante imparfaite, concernant l'environnement extérieur du véhicule, sans quoi toute reprise du mode manuel pourrait conduire la personne conductrice, sur la base de ce préjugé erroné ou de cette représentation imparfaite, à prendre une décision inadaptée voire dangereuse pour la conduite du véhicule routier. Cette première période de temps assure également que, quelle que soit la personne conductrice et son aptitude à éviter la formation de préjugés erronés dans son esprit, la suite de la phase de réengagement est débutée sur une même base de représentation mentale.

Une autre idée à la base l'invention est de fournir à la personne conductrice pendant au moins une partie cette première période, la représentation symbolique de l'environnement extérieur, qui est avantageusement une représentation simplifiée et/ou codifiée à l'aide de symboles, permettant à la personne d'appréhender facilement l'environnement extérieur pour la construction de sa représentation mentale. Cette représentation symbolique montre avantageusement à la personne, préférentiellement dans un certain ordre et selon une certaine cadence prédéterminée, tour à tour, progressivement ou cumulativement certains éléments essentiels de cet environnement extérieur, tels qu'un système de voies ou des objets d'attention particuliers de cet environnement extérieur. Il est ainsi particulièrement aisé pour la personne de construire sa représentation mentale en prenant conscience progressivement de tous les éléments de l'environnement extérieur du véhicule routier, ce qui évite toute erreur de jugement lorsque le mode manuel est à nouveau enclenché.

Une autre idée à la base de l'invention est de prévoir la deuxième période de temps, dans laquelle, une fois qu'une représentation mentale correcte des éléments essentiels de l'environnement extérieur a été construite par la personne conductrice au cours de la première période, cette personne conductrice est confrontée à l'environnement extérieur tel qu'il est réellement, afin de compléter cette représentation mentale en vue du passage en mode manuel.

D'autres caractéristiques optionnelles et avantageuses de l'invention sont définies dans ce qui suit :
- L'assistant de conduite est configuré pour que la phase de réengagement dure entre 1 et 30 secondes, de préférence entre 2 et 7 secondes.
- L'assistant de conduite est configuré de sorte que la première période de temps comprend une troisième sous-période, suivant la deuxième sous-période, pendant laquelle la représentation symbolique représente à la fois le système de voies de circulation routière et l'objet d'attention.
- Lorsque l'environnement extérieur comprend au moins deux objets d'attention, parmi lesquels un premier objet d'attention et un deuxième objet d'attention, l'assistant de conduite est configuré pour que au cours de la troisième sous-période, la représentation symbolique représente à la fois le système de voies de circulation routière et le premier objet d'attention sans représenter le deuxième objet d'attention, et la première période de temps comprend une quatrième sous-période suivant la troisième sous-période, pendant laquelle la représentation symbolique représente à la fois le système de voies de circulation routière, le premier objet d'attention et le deuxième objet d'attention.
- L'assistant de conduite est configuré de sorte que la deuxième période de temps comprend une cinquième sous-période au cours de laquelle l'afficheur d'assistance continue de diffuser la représentation symbolique.
- Au cours de la phase de réengagement, au moins pendant la deuxième période de temps, l'afficheur d'assistance est configuré pour superposer, à l'attention de la personne conductrice en arrière-plan, l'image réelle fournie par le transmetteur, et au premier plan, la représentation symbolique.
- L'assistant de conduite est configuré pour que chaque sous-période dure entre 0,4 secondes et 2 secondes, de préférence entre 0,5 secondes et 0,8 secondes.
- La commande de conduite du véhicule routier comprend au moins l'une des commandes suivantes : une commande de gestion de la direction du véhicule routier, une commande de mise en accélération du véhicule routier, et une commande de mise en décélération du véhicule routier.

L'invention a également pour objet une méthode de réengagement de la conduite manuelle, mise en œuvre à l'aide d'un véhicule routier conforme à ce qui précède, méthode dans laquelle, avant un basculement de l'assistant de conduite depuis le mode automatique vers le mode manuel, l'assistant de conduite met en œuvre la phase de réengagement.

L'invention sera mieux comprise à la lecture de la description qui suit, donnée uniquement à titre d'exemple non limitatif et faite en se référant aux dessins dans lesquels :
- les figures 1 à 6 représentent chacune un véhicule routier conforme à un mode de réalisation préférentiel de l'invention, du point de vue d'une personne conductrice embarquée dans ce véhicule routier, et
- la figure 7 est une représentation synoptique du véhicule routier des figures 1 à 6.

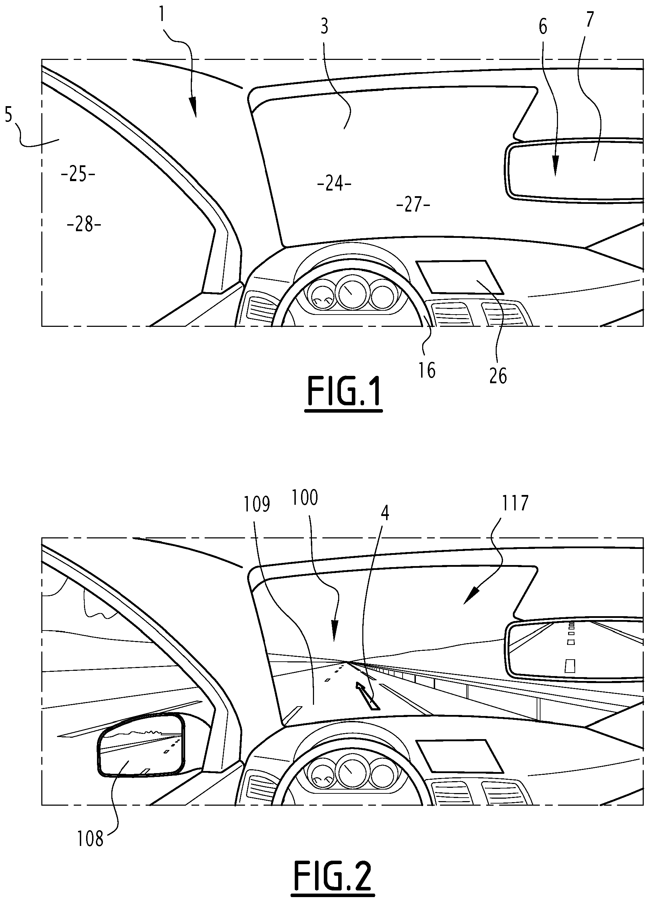

Le véhicule routier 1 illustré sur les figures 1 à 6 est une automobile. Le véhicule routier pourrait tout aussi bien être un camion, un autobus, un autocar, un deux roues, ou tout autre type de véhicule routier. Le véhicule routier 1 est préférentiellement motorisé. Le véhicule routier 1 présente de préférence au moins deux roues de traction actionnées par la motorisation.

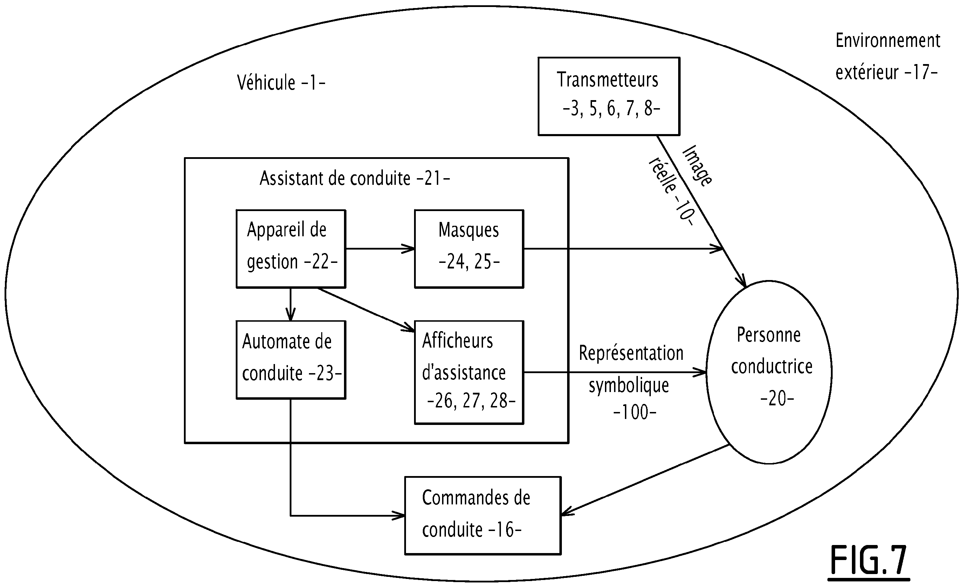

Le véhicule 1 est prévu pour transporter une personne conductrice 20, symbolisée sur la figure 7 et non visible sur les figures 1 à 6. Lorsqu'elle est transportée, la personne 20 est par exemple en position assise à un poste de conduite comprenant un siège avant gauche du véhicule 1. De manière générale, la personne conductrice 20 se situe dans l'habitacle. Par personne conductrice 20, on entend par exemple une personne désignée comme responsable de la conduite du véhicule, apte à conduire elle-même le véhicule par action sur des commandes de conduite du véhicule 1, dans certaines situations décrites ci-après. De façon optionnelle, le véhicule routier 1 peut transporter d'autres personnes ou animaux, qui sont des passagers, et/ou des objets tels que des articles ou des marchandises.

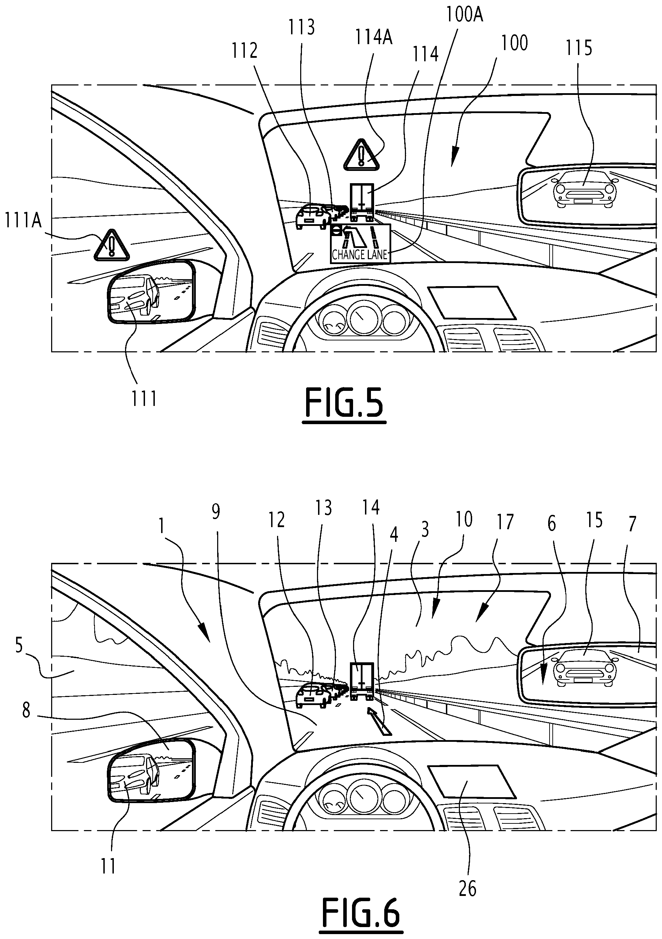

Comme visibles sur la figure 6, le véhicule 1 est pourvu d'un pare-brise 3, de vitres latérales, dont seule une vitre latérale avant-gauche 5 est visible sur la figure 6, un rétroviseur central intérieur 7, une lunette arrière 6 ou vitre arrière, laquelle est visible par réflexion dans le rétroviseur 7 sur la figure 6, des rétroviseurs externes latéraux, dont un rétroviseur externe latéral gauche 8 est visible sur la figure 6. Chacun de ces éléments constitue un transmetteur d'une image réelle 10 d'un environnement extérieur 17 du véhicule à l'attention de la personne conductrice 20, cette image réelle 10 étant visible de façon non masquée sur la figure 6. En effet, si elle le souhaite, la personne conductrice 20 peut porter son attention sur l'environnement extérieur 17 par l'intermédiaire de chacun de ces transmetteurs, et ainsi observer et capter des informations concernant cet environnement extérieur 17. Une visière d'un casque porté par la personne conductrice 20, une paire de lunettes portées par la personne conductrice 20 peuvent également constituer un tel transmetteur. En variante, une fenêtre sans vitre ou à vitre ouverte du véhicule, peut également constituer un tel transmetteur. De manière générale, le transmetteur comprend préférentiellement au moins une vitre, un miroir ou une lentille au travers de laquelle ou duquel la personne conductrice 20 peut observer une image réelle 10 de l'environnement extérieur 17 du véhicule 1, c'est-à-dire une image transmise par un moyen optique de l'environnement extérieur 17 tel qu'il est dans la réalité, à l'instant où cette observation a lieu.

En variante, le transmetteur, ou au moins l'un des transmetteurs, comprend un capteur de l'image réelle 10, tel qu'une caméra, ainsi qu'un moyen de retransmission de l'image réelle 10 ainsi captée, tel qu'un afficheur pourvu d'un moniteur qui affiche l'image réelle 10 captée par la caméra, à l'attention de la personne conductrice 20. Ce moyen de retransmission peut être l'un des afficheurs d'assistance du véhicule, tels que les afficheurs d'assistance 26, 27 et 28 décrits dans ce qui suit. Alternativement, le moyen de retransmission comprend un afficheur d'image réelle 10 appartenant au véhicule routier et étant distinct de l'afficheur d'assistance.

Par « environnement extérieur », on entend l'environnement qui se trouve aux alentours du véhicule 1, dont au moins une partie est dans le champ de vision de la personne conductrice 20 via le ou les transmetteurs. De préférence, on entend par environnement extérieur 17 une partie de l'environnement qui est limitée à ce qui est susceptible d'affecter le véhicule 1 de façon imminente, et/ou à une partie des alentours du véhicule, par exemple située à moins de 300 mètres de rayon du véhicule 1.

Pour le moins à titre principal, le véhicule 1 est prévu pour être stationné, arrêté, manœuvré et mis en circulation sur un système routier, comprenant notamment des routes goudronnées ou revêtues de matériaux propices à la circulation routière, et constituant ainsi un système de voies de circulation routière. Dans le présent exemple, le système de voies de circulation comprend un tronçon de route principale 9 goudronnée, sur laquelle est positionné et circule le véhicule routier 1 selon la direction 4, qui est une direction avant. Au moins une partie du système de voies de circulation, en particulier le tronçon de route 9, appartient à l'environnement extérieur 17 du véhicule 1.

L'environnement extérieur 17 est également susceptible de comprendre, comme visibles sur la figure 6, des véhicules routiers tiers, tels que les véhicules 11, 12, 13, 14 et 15, appartenant, dans le cas d'exemple, à la circulation routière circulant sur le tronçon de route 9 et étant distincts du véhicule 1. Ces véhicules 11, 12, 13, 14 et 15 sont susceptibles de constituer une contrainte pour la conduite du véhicule routier 1. Par exemple, le véhicule 14 progressant devant le véhicule 1 selon une même trajectoire peut imposer au véhicule 1 de décélérer ou freiner afin d'éviter une collision, si le véhicule 14 est à une vitesse moins importante que le véhicule 1 ou ralentit. Les véhicules 11, 12 et 13 circulant selon une trajectoire parallèle à, et située à gauche de, celle du véhicule 1, ils pourraient s'opposer à un changement de trajectoire vers la gauche du véhicule 1. Le véhicule 15 étant derrière le véhicule 1, il pourrait s'opposer à une décélération trop importante du véhicule 1. De manière générale, les véhicules 11, 12, 13, 14 et 15 étant susceptibles d'entrer en conflit ou de contraindre la conduite du véhicule 1 pour éviter une collision, ils constituent des objets d'attention de l'environnement extérieur 17 du véhicule 1. L'environnement extérieur 17 pourrait également comprendre d'autre objets d'attention, tels que des personnes, des animaux, des obstacles présents sur le tronçon 9, susceptible d'impacter de façon similaire la conduite du véhicule 1, ou encore un élément de signalisation de la circulation routière, indiquant par exemple une limitation de vitesse, une indication de destinations, une obligation d'arrêt ou toute règle de circulation sur le tronçon 9.

Le véhicule 1 comprend également un volant de direction 16 visible aux figures 1 à 6, ainsi qu'une pédale d'accélération, une pédale de frein, ainsi qu'éventuellement toute autre commande de conduite du véhicule 1 appropriée. Par opposition à une commande auxiliaire du véhicule, incluant par exemple le contrôle de l'air conditionné, de l'ouverture d'une portière, on entend préférentiellement, par commande de conduite, une commande qui produit un effet substantiel sur le comportement du véhicule au sein de l'environnement extérieur 17. Par exemple, il peut s'agit d'une commande de gestion de la direction du véhicule routier 1, de mise en accélération du véhicule routier, et/ou de mise en décélération du véhicule routier, par exemple par freinage.

Comme illustré sur la figure 7, le véhicule routier 1 comprend un assistant de conduite 21, qui est constitué d'un appareil ou d'un système d'appareils embarqué à bord du véhicule 1.

De préférence, l'assistant de conduite 21 comprend un appareil ou module de gestion 22, apte à coordonner le fonctionnement des autres éléments qui le composent. Cet appareil 22 comprend de préférence un processeur et une mémoire, et se présente par exemple sous la forme d'un ordinateur embarqué, ou d'un appareil électronique, pour exécuter un programme afin d'assurer la gestion et la coordination des autres éléments de l'assistant de conduite 21.

L'assistant 21 comprend également un automate de conduite 23. Grâce à cet automate de conduite 23, l'assistant 21 peut basculer, sur commande de la personne 20 ou sur commande du module de gestion 22, entre :
- un mode manuel dans lequel les commandes de conduite 16, de préférence les commandes de gestion de la direction et de mise en accélération et décélération, sont mises sous le contrôle de la personne 20 pour conduire le véhicule 1;
- un mode automatique dans lequel ces commandes sont mises sous le contrôle de l'automate de conduite 23 pour conduire le véhicule.

De préférence, en mode automatique, au moins l'une des commandes de conduite, voire toutes, est sous le contrôle de l'automate 23 sans intervention de la personne 20. De préférence, en mode automatique, l'automate 23 assure une conduite autonome du véhicule 1. Alternativement, au moins l'une des commandes de conduite est sous le contrôle de l'automate 23 avec une possibilité d'intervention, de décision, d'instruction ou de correction de la gestion de cette commande par la personne 20.

On préfère que le mode de conduite automatique soit un mode de conduite hautement automatisé, qui transmet à l'automate de conduite la responsabilité de la conduite du véhicule, alors que la personne conductrice en est déchargée.

De préférence, en mode manuel, au moins l'une des commandes de conduite, voire toutes, est sous le contrôle de la personne 20 avec une assistance ou une aide à la conduite par l'automate 23 ou un autre composant du véhicule 1. Alternativement, au moins l'une de ces commandes est entièrement sous le contrôle de la personne 20 sans assistance.

L'automate 23 peut se présenter sous la forme d'un appareil ou d'un module, séparé ou combiné avec l'appareil 22, et comprenant par exemple un processeur et une mémoire configurés pour exécuter un programme d'automatisation de la conduite du véhicule 1. L'automate 23 et l'appareil 22 communiquent par exemple à l'aide d'un bus de données ou tout moyen filaire ou sans fil équivalent. L'assistant de conduite 21 comprend préférentiellement divers capteurs prévus sur le véhicule 1, pour transmettre à l'automate 23 toute information nécessaire à la conduite automatique, notamment des informations concernant l'environnement extérieur 17 et de divers paramètres du véhicule 1. Optionnellement, l'automate 23 peut comprendre un récepteur sans fil d'instructions de conduite émises à distance par un gestionnaire de conduite distant, par l'infrastructure routière, et/ou par les autres véhicules.

En mode automatique comme en mode manuel, la conduite peut consister notamment en un stationnement, un arrêt, une manœuvre à basse vitesse, ou une conduite à vitesse de croisière, du véhicule 1.

Tel qu'illustré sur les figures 1 et 7, l'assistant 21 comprend également un ou plusieurs masques 24 et 25. Chaque masque 24 et 25 est associé à au moins l'un des transmetteurs 3, 5, 6, 7 et 8. Dans le présent exemple, le masque 24 est un masque du pare-brise 3, et le masque 25 est un masque de la vitre latérale 5. Chaque masque du véhicule 1 est apte à évoluer entre :
- une configuration de masquage, comme sur les figures 1 à 5, dans laquelle l'image réelle 10 du transmetteur associé au masque concerné est transmise masquée à l'attention de la personne 20 ; et
- une configuration de non-masquage, comme illustrée sur la figure 6, dans laquelle l'image réelle 10 du transmetteur associé au masque concerné est transmise non-masquée à l'attention de la personne 20.

Chaque masque 24 et 25 est par exemple formé par un dispositif mécanique, tel qu'un store motorisé, commandé par l'appareil 22, de façon à évoluer entre la configuration de masquage dans laquelle le store couvre au moins partiellement le pare-brise 3 et la fenêtre 5 respectivement. Le même schéma peut optionnellement être appliqué aux rétroviseurs 7 et 8, à la lunette arrière, et à tout autre transmetteur du véhicule 1, notamment dans le cas où ce transmetteur comprend une vitre au travers de laquelle la personne 20 est susceptible de vouloir observer l'environnement 17. On peut aussi prévoir que le transmetteur et le masque forment un seul dispositif ou un seul système.

Par exemple, un pare-brise à opacification commandé par l'appareil 22, peut être prévu et assurer à la fois une fonction de transmetteur et de masque. Un tel dispositif évolue entre une configuration de masquage, dans laquelle il est opaque, assombri ou flouté, et une configuration de non-masquage, dans laquelle il est relativement translucide. Pour cette opacification commandée d'une vitre, on peut prévoir par exemple une pigmentation, ou un élément chimique, commandable sous l'effet d'une impulsion électrique par l'appareil 22.

Dans le cas où le transmetteur comprend un capteur et un moyen de retransmission, le masque peut consister en une coupure de la retransmission, une coupure du capteur ou tout moyen similaire. Dans ce cas également, le transmetteur est susceptible d'embarquer la fonction de masque.

Quel que soit le mode de réalisation, en fonction de l'application, en configuration de masquage, le masque peut notamment, en configuration de masquage, occulter, assombrir, ou rendre floue l'image réelle 10 transmise à l'attention de la personne conductrice. La configuration de masquage peut consister en une non-transmission de l'image réelle 10 à la personne 20. En tout cas, la configuration de masquage rend l'appréhension de l'environnement 17 difficile par la personne 20, de sorte que celle-ci ne peut normalement pas appréhender l'environnement 17 de façon suffisante pour une conduite manuelle du véhicule 1 à cet instant, même avec un certain temps d'observation.

En configuration de non-masquage, l'image réelle 10 est soumise à l'attention de la personne 20 de façon moins occultée, moins floue ou moins assombrie, en tout cas de façon à permettre à la personne 20 d'appréhender l'environnement 17 de façon suffisante pour une conduite manuelle du véhicule 1, au moins après un certain temps d'observation.

L'assistant 21 comprend également un ou plusieurs afficheurs d'assistance à la conduite. L'affichage fourni par chaque afficheur d'assistance est à l'attention de la personne 20. Chaque afficheur d'assistance est avantageusement configuré pour communiquer avec l'appareil de gestion 22.

Chaque afficheur d'assistance peut se présenter sous la forme d'un afficheur déporté 26, prévu par exemple comme élément du tableau de bord, ou fixé sur le pare-brise. L'afficheur 26 peut également être un périphérique amovible ou mobile, apte à communiquer avec l'appareil de gestion 22 avec ou sans fil, et étant manipulable par la personne 20. L'afficheur d'assistance peut être porté par la personne conductrice, sous la forme d'un casque ou similaire. Dans ce cas, l'afficheur d'assistance comprend au moins un moniteur d'affichage d'une image. S'il constitue un périphérique amovible ou mobile, il peut se présenter par exemple sous la forme d'une tablette électronique. Un tel afficheur déporté peut optionnellement assurer, en plus de sa fonction d'afficheur d'assistance, une fonction de transmetteur de l'image réelle 10 de l'environnement 17, et une fonction de masque. Cet afficheur peut donc se présenter comme un afficheur de réalité augmentée et/ou de réalité virtuelle.

Chaque afficheur d'assistance peut se présenter sous la forme d'un afficheur intégré dans, ou combiné avec, l'un des transmetteurs, par exemple un affichage ou un affichage de réalité augmentée. Tout ou partie des transmetteurs peuvent en être équipé, en fonction de l'application. Dans l'exemple illustré, quelques transmetteurs du véhicule 1 sont équipés d'un afficheur d'assistance : le pare-brise 3 comprend un afficheur 27, la vitre latérale 5 comprend un afficheur 28, ainsi que la lunette arrière 6 et/ou le rétroviseur central 7 comprend un afficheur. Chacune des vitres susmentionnées comprend donc par exemple un écran transparent, dont la transparence peut être occultée pour tout ou partie de la surface vitrée, pour afficher une image artificielle sur cette surface, par opposition à l'image réelle 10 transmise par cet écran lorsqu'il est transparent. Dans ce cas, l'afficheur peut également assurer la fonction de masque, de sorte qu'un même dispositif du véhicule 1 peut assurer à la fois les fonctions de transmetteur, masque et afficheur d'assistance. Chacune des vitres susmentionnée comprend alternativement un affichage tête-haute, qui permet de superposer une image artificielle par-dessus l'image réelle 10. Dans ce cas, un même dispositif n'assure pas nécessairement la fonction de masque, mais simplement les fonctions de transmetteur et d'afficheur d'assistance.

L'afficheur d'assistance peut également se présenter sous la forme d'un afficheur tête-haute déporté ou séparé des transmetteurs du véhicule 1.

Tout ou partie des afficheurs d'assistance susmentionnés sont conçus pour diffuser, c'est-à-dire pour soumettre, à l'attention de la personne 20, une représentation symbolique 100 de l'environnement 17.

La représentation symbolique 100 consiste préférentiellement en une représentation artificielle de l'environnement 17, par exemple sous forme dessinée et/ou stylisée et/ou sous forme graphique et/ou agrémentée de pictogrammes et/ou comprenant certaines parties sélectionnées de l'image réelle 10, présentées sous forme fragmentée, regroupée, et/ou transformée. La représentation symbolique 100 peut notamment ne représenter que certains objets d'attention de l'environnement 17, tels que définis ci-avant. De préférence, au moins l'une des représentations d'un objet d'attention est accompagnée ou associée à la représentation d'un pictogramme. La représentation symbolique 100 est notamment une représentation simplifiée de la réalité de l'environnement 17, illustrée du point de vue de la personne 20. En d'autres termes, la représentation symbolique 100 est préférentiellement une vue en perspective sous un angle identique ou proche de celui de l'image réelle 10 perçue par la personne 20, à la façon d'une simulation de la réalité de l'environnement 17. La représentation symbolique 100 est avantageusement tridimensionnelle, mais peut être représentée sous forme bidimensionnelle, par exemple sous la forme d'un plan vu du ciel, décrivant l'environnement 17. La représentation symbolique 100 illustre avantageusement l'environnement 17 dans son état présent, préférentiellement de façon dynamique et animée. La représentation symbolique 100 peut illustrer l'environnement 17 peut contenir des indications concernant l'environnement 17 dans un état passé ou un état espéré ou estimé du futur.

Tout ou partie des afficheurs d'assistance susmentionnés, notamment les afficheurs 27 et 28, sont préférentiellement configurés pour diffuser à la personne 20 une superposition de l'image réelle 10, masquée ou non, et la représentation symbolique 100 de l'environnement 17 susmentionnée. Par « superposition », on entend que, du point de vue de la personne conductrice, les éléments représentés symboliquement par la représentation symbolique 100 sont positionnés à une même coordonnée, ou une coordonnée voisine, du champ de vision de la personne conductrice, que les éléments réels apparaissant sur l'image réelle 10 en arrière-plan de la représentation symbolique 100, en correspondance de position à l'image. C'est le cas dans un afficheur tête haute et dans un afficheur de réalité augmentée. De préférence, dans cette superposition, l'image réelle 10 fournie par le transmetteur est en arrière-plan alors que la représentation symbolique 100 est au premier plan.

Alternativement, un afficheur d'assistance peut ne transmettre que la représentation symbolique 100, sans superposition avec l'image réelle 10.

Dans le présent exemple, tel qu'illustré sur les figures 2 à 5, les afficheurs 26, 27 et 28 affichent, au sein de la représentation symbolique 100 :
- une représentation symbolique 117 d'au moins une partie de l'environnement 17 ;
- une représentation symbolique 109 du tronçon 9 ;
- une représentation symbolique 108 du rétroviseur extérieur 8, ou de tout autre élément du véhicule 1 dont l'image réelle 10 serait visible par la personne 20 par l'intermédiaire de l'un des transmetteurs ;
- une représentation symbolique 111, 112, 113, 114 et 115 respective des véhicules tiers 11, 12, 13, 14 et 15, dont deux sont associés à un pictogramme 111A et 114A, pour attirer l'attention de la personne 20 sur les véhicules 11 et 12, ou pour donner une information sur ces véhicules 11 et 12.

Dans le présent exemple, la représentation du tronçon 9 est symbolique dans la mesure où de nombreux détails de l'environnement extérieur, non essentiels à la conduite, ont été simplifiés : en particulier, les arbres et les nuages du ciel ont été supprimés.

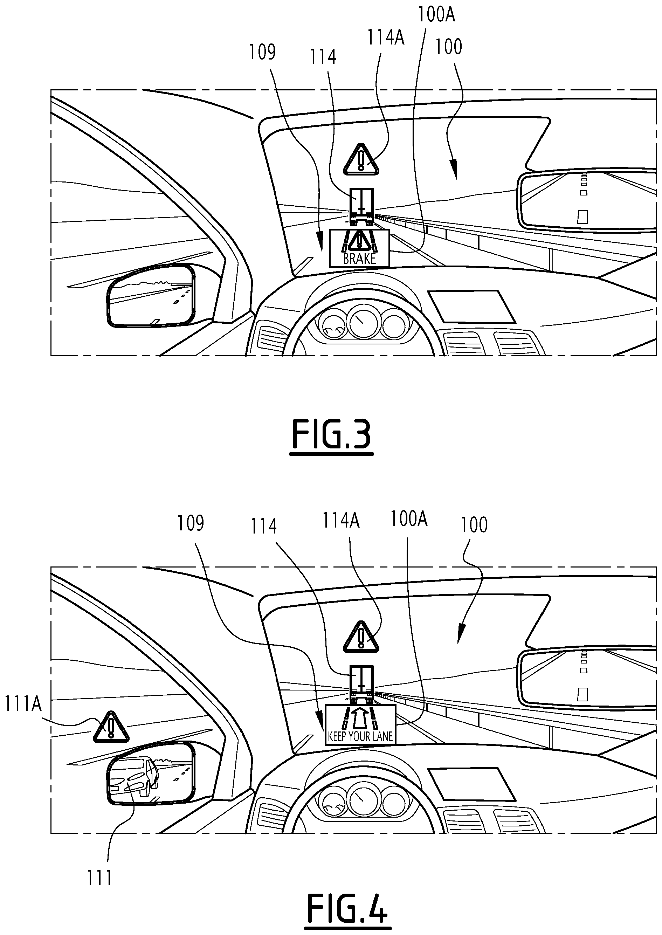

Les pictogrammes peuvent simplement attirer l'attention de la personne 20 sur l'un des objets d'attention, ou de surcroît, présenter des informations concernant des caractéristiques de l'objet d'attention, par exemple sa vitesse s'il s'agit d'un véhicule, ou une direction associée à l'une des voies du tronçon de route 9. Les pictogrammes peuvent également représenter, de façon symbolique et/ou écrite, des actions de conduite impératives, recommandées, conseillées, possibles, déconseillées, impossibles et/ou interdites, que la personne 20 sera amenée à engager lorsqu'elle devra reprendre le contrôle du véhicule 1 en mode manuel. Par exemple, le pictogramme 100A de la figure 3 indique qu'il convient de freiner, afin d'éviter une collision avec le véhicule 14. Par exemple, sur la figure 4, le pictogramme 100B indique qu'il convient de maintenir le véhicule 1 dans la même voie de circulation. Le pictogramme 100C sur la figure 5 indique qu'il convient de ne pas déporter le véhicule 1 vers la voie de gauche, afin d'éviter une collision notamment avec le véhicule 11 circulant sur cette voie de gauche. Un autre pictogramme pourrait indiquer une possibilité de changer de voie de circulation, d'accélérer, ou encore rappeler le chemin à suivre pour poursuivre un itinéraire donné. La représentation symbolique 100 peut également contenir une représentation de certaines informations propres à l'état ou aux caractéristiques du véhicule. Par exemple, la représentation 100 peut indiquer que l'assistant de conduite 21 est en mode automatique et qu'il s'apprête à basculer en mode manuel, tout en indiquant le temps restant avant ce basculement en mode manuel. La représentation 100 peut également contenir une indication de la réserve de carburant, de la vitesse du véhicule, de la température de certaines parties du système de motorisation du véhicule, ou toute autre information utile à l'instant donné.

Le véhicule 1 ainsi défini, et plus particulièrement l'assistant de conduite 21, est configuré pour mettre en œuvre une méthode de réengagement de la conduite manuelle, comprenant une phase de réengagement du mode manuel, immédiatement avant un basculement en mode manuel, ordonné par exemple par la personne 20 ou par l'appareil de gestion 22. Cette phase de réengagement est mise en œuvre alors que le mode automatique est encore engagé, et se termine au moment du basculement en mode manuel. On préfère que cette phase de réengagement soit mise en œuvre avant tout basculement en mode manuel de l'assistant 21.

De préférence, en mode de conduite automatique, notamment immédiatement avant la phase de réengagement, la personne 20 est au poste de conduite du véhicule routier 1, ou pour le moins est embarquée dans le véhicule routier 1, de façon à être apte à porter son attention sur les images réelles et les représentations symboliques qui peuvent lui être soumises. En mode de conduite automatique, notamment immédiatement avant la phase de réengagement, le masque est maintenu en configuration de non-masquage, de sorte que la personne 20 reçoit l'image réelle non masquée et peut voir l'environnement extérieur du véhicule routier.

De préférence, au moins pendant la phase de réengagement, la personne 20 est au poste de conduite du véhicule routier 1, ou pour le moins est embarquée dans le véhicule routier 1, de façon à être apte à porter son attention sur les images réelles et les représentations symboliques qui peuvent lui être soumises durant cette phase de réengagement.

De préférence, la phase de réengagement dure entre 1 et 30 secondes, de préférence entre 2 et 7 secondes, ce qui laisse normalement suffisamment de temps à la personne 20 de se reconstruire une représentation mentale de l'environnement 17 avant le basculement en mode manuel.

La phase de réengagement comprend une période de temps initiale, illustrée aux figures 1 à 5, qui sont triées par ordre chronologique, pendant toute laquelle les masques 24 et 25 sont maintenus en configuration de masquage.

Selon un mode de réalisation, au début de cette période de temps initiale A, la perception de l'environnement extérieur par la personne 20 est réinitialisée, comme expliqué ci-avant. L'assistant est configuré de sorte que, la première période de temps comprend une sous-période de réinitialisation AA, pendant laquelle la représentation symbolique ne représente ni le système de voies ni les objets d'attention, comme illustré sur la figure 1. Cela permet normalement d'obtenir une réinitialisation complète de la représentation mentale de l'environnement extérieur 17 par la personne 20.

Cette sous-période AA pourrait alternativement être obtenue par simple absence de diffusion de la représentation symbolique, la personne 20 ne recevant que l'image réelle 10 masquée.

Pendant une partie de la période A débutant préférentiellement dès la fin de la sous-période AA et se terminant à la fin de la période A, il est prévu que les afficheurs d'assistance 26, 27 et 28 diffusent la représentation symbolique 100, incluant la représentation symbolique 117 de l'environnement extérieur 17 du véhicule 1, à l'attention de la personne 20, situation illustrée sur les figures 2 à 5.

Cela débute préférentiellement par une sous-période AB illustrée sur la figure 2, qui se déroule immédiatement à la suite de la sous-période AA. Pendant cette sous-période AB, la représentation symbolique 100 comprend la représentation symbolique 109 du tronçon 9, ou plus généralement du système de voies. La personne 20 prend ainsi connaissance d'une information de contexte de conduite, néanmoins fondamentale pour la conduite manuelle et la reconstruction de sa représentation mentale de l'environnement extérieur 17. Dans cette sous-période AB, aucun objet d'attention n'est représenté : en particulier, la représentation symbolique ne comprend pas les représentations des véhicules, des obstacles ou de tout autre élément.

De préférence, pendant la période A, une sous-période AC suit immédiatement la sous-période AB, au cours de laquelle la représentation 114 du véhicule 14 est ajoutée à la représentation 109, alors que les autres objets d'attention ne sont toujours pas représentés, tel qu'illustré sur la figure 3. De manière plus générale, au cours de cette sous-période AC, la représentation symbolique 100 représente à la fois le système de voies et un premier objet d'attention, sans représenter le deuxième objet d'attention. De préférence, le premier objet d'attention est choisi parmi les objets d'attention de l'environnement 17 considérés comme les plus critiques pour la conduite du véhicule 1. Par « critique », on entend notamment tout objet susceptible de constituer une contrainte ou un danger de façon imminente sans correction de la conduite du véhicule 1. Pour des raisons de sécurité ou de bonne conduite du véhicule 1, l'attention de la personne 20 est avantageusement portée en priorité sur ces objets d'attention critiques, par rapport aux autres objets d'attention qui seront montrés à la personne 20 pendant les sous-périodes suivantes. Dans l'exemple illustré, le véhicule 14, situé devant le véhicule 1, est en train de freiner, tout en étant sur la même voie que le véhicule 1. Le véhicule 14 est donc considéré comme critique, puisqu'il génère un risque de collision entre les véhicules 1 et 14 si la conduite du véhicule 1 n'est pas rapidement modifiée selon une commande de décélération. Un autre objet critique pourrait être un obstacle fixe disposé sur la voie de circulation du véhicule 1. Un objet critique est notamment un objet disposé dans la trajectoire du véhicule 1. En variante, un objet d'attention peut être considéré comme critique s'il nécessite une prise de décision immédiate de la part de la personne 20 concernant un choix de changer de conduite ou non, par exemple le choix d'une route ou d'une direction à prendre à une intersection du tronçon de route 9, sans toutefois représenter de danger particulier.

Dans le présent exemple, la représentation 114 de l'objet critique est associée à un pictogramme 114A pour attirer l'attention de la personne 20 sur son caractère critique. On peut choisir d'afficher le pictogramme 114A, optionnellement combiné à un pictogramme indiquant une action de conduite à entreprendre tel que l'un des pictogrammes 100A, 100B et 100C. En variante, le pictogramme 114A associé à l'objet critique n'est pas prévu alors que l'on prévoit un ou plusieurs pictogrammes indiquant une action de conduite à entreprendre.

Dans cette sous-période AC, plusieurs objets d'attention critiques peuvent être représentés, s'ils sont tous considérés comme les plus critiques, et alors que d'autres objets d'attention ne sont pas représentés.

Dans un autre mode de réalisation, on peut également envisager de ne pas effectuer la sous-période AB, et d'effectuer immédiatement la sous-période AC après la sous-période AA, de sorte que la personne 20 reçoit à la fois l'information de contexte de conduite et l'information concernant les objets d'attention critiques.

Selon encore un autre mode de réalisation, la période A est débutée avec la sous-période AB, sans sous-période AA. Dans ce mode de réalisation, les afficheurs d'assistance diffusent une représentation symbolique durant toute la période A. De préférence, la sous-période AB est immédiatement suivie de la sous-période AC. Dans ce mode de réalisation, l'affichage des informations pour la reconstruction mentale de la personne 20 est effectué progressivement, de façon hiérarchisée par ordre d'importance, ou priorisée. Les objets ne sont pas tous affichés en même temps, mais sont au contraire affichés de façon répartie dans le temps, un par un, ou groupe par groupe, préférentiellement par ordre d'importance, pour permettre une bonne reconstruction mentale de la situation de conduite. Quel que soit le mode de réalisation, immédiatement à la suite de la sous-période AC, pendant la période A, on prévoit avantageusement une sous-période AD illustrée sur la figure 4, pendant laquelle la représentation symbolique 100 représente à la fois le système de voies, les objets d'attention critiques, et un ou plusieurs autres objets d'attention qui peuvent être qualifiés d'objets d'attention importants, mais non-critiques. Par « important », on entend préférentiellement tout objet qui :
- ne constitue pas un danger si la conduite du véhicule 1 n'est pas modifiée, et dès lors n'est pas critique, et
- optionnellement, ne nécessite pas une prise de décision immédiate de changement de conduite de la part de la personne 20, et dès lors n'est pas critique, et
- constitue un danger si la conduite du véhicule 1 est modifiée de façon inappropriée.

Ainsi, la personne 20 est renseignée sur les contraintes conditionnant tout changement de conduite qu'elle souhaiterait entreprendre au cours de la sous-période AD.

Dans le cas illustré sur la figure 4, la représentation 111 du véhicule 11 est ajoutée à la représentation 100, en plus des représentations 109 et 114. Le véhicule 11 est sur la voie à gauche du véhicule 1, et empêche le véhicule 1 de déboîter à gauche par exemple pour doubler le véhicule 14. Dans cet exemple, le véhicule 11 constitue donc un objet d'attention important, dans la mesure où :
- sans changement de conduite du véhicule 1, il ne semble pas exister de risque sérieux de collision entre le véhicule 1 et le véhicule 11, et
- si la conduite du véhicule 1 est modifiée en déboîtant sur la gauche, il existe un risque non négligeable de collision entre les véhicules 1 et 14.

Un autre objet critique pourrait être un obstacle fixe disposé sur la voie à gauche de la voie de circulation du véhicule 1. Un objet critique est notamment un objet disposé hors de la trajectoire actuelle du véhicule 1, mais sur une trajectoire que serait susceptible de prendre le véhicule 1, notamment dans une correction de conduite en réaction à un objet d'attention critique.

Dans le présent exemple, la représentation 111 de l'objet important est associée à un pictogramme 111A pour attirer l'attention de la personne 20 sur son caractère important.

Les objets d'attention non-importants et non-critiques de l'environnement 17 ne sont toujours pas représentés au stade de la sous-période AD.

Immédiatement à la suite de la sous-période AD, pendant la période A, on prévoit avantageusement une sous-période AE illustrée sur la figure 5, pendant laquelle la représentation symbolique 100 représente à la fois le système de voies, les objets d'attention critiques, les objets d'attention importants et tout ou partie des autres objets d'attention non-importants et non-critiques. Cette sous-période AD constitue une sous-période de transition préalable à l'affichage de l'image réelle 10 effectué ensuite.

Certaines des sous-périodes susmentionnées AA, AB, AC, AD et AE peuvent ne pas être effectuée, l'ordre des sous-périodes étant toutefois préférentiellement celui précité. Lorsque l'environnement 17 ne contient qu'un objet d'attention, ou pas d'objet d'attention, ou est dénué d'objet critique ou important, certaines des sous-périodes AA, AB, AC, AD, AE peuvent être rallongées et/ou certaines sous-périodes supprimées.

De préférence, chaque sous-période mentionnée dans le présent document dure entre 0,4 secondes et 2 secondes, de préférence entre 0,5 secondes et 0,8 secondes, ce qui laisse suffisamment de temps à la personne 20 d'effectuer une construction correcte et précise de sa représentation mentale de l'environnement 17. Néanmoins, ce temps est particulièrement court, afin de permettre une reprise de la conduite manuelle la plus rapide possible par la personne 20. De préférence, la période A est cadencée de façon plus ou moins régulière par ces sous-périodes. De préférence, la durée de chaque sous-période est la même.

De manière générale, lors de la période A, la représentation symbolique 100 permet une reconstruction de la représentation mentale progressive et hiérarchisée, en d'autres termes priorisée. En effet, les objets les plus critiques sont portés à l'attention de la personne 20 en premier, alors que les autres objets sont présentés plus tard. Cela reproduit un processus naturel de reconstruction mentale d'une situation par un individu, afin de faciliter cette reconstruction.

Pendant la phase reconstruction, une deuxième période B suit immédiatement la première période A, tel qu'illustré sur la figure 6. La période B s'étend jusqu'au basculement de l'assistant 21 depuis le mode automatique vers le mode manuel. La période B débute au moment où les masques 24 et 25 sont mis en position de non-masquage par l'appareil de gestion 22. Pendant toute cette période B, les masques 24 et 25 sont maintenus en configuration de non-masquage par l'appareil 22. Au cours de cette période B, la personne 20 peut donc observer l'image réelle 10 non masquée, afin qu'une représentation complète de l'environnement 17 soit construite dans son esprit.

De manière avantageuse, la période B comprend une sous-période BA au cours de laquelle au moins l'un des afficheurs d'assistance 26, 27, 28 continue de diffuser la représentation symbolique 100, au moins en ce qui concerne certaines représentations telles que les pictogrammes, et/ou certains objets d'attention, notamment critiques et/ou importants, par exemple en superposition sur l'image réelle 10. Cela permet une transition encore plus progressive. En particulier, les pictogrammes associés aux objets critiques, aux objets importants, et/ou indiquant une action de conduite à entreprendre, sont avantageusement maintenus pendant quelques secondes après le passage du masque en non-masqué, et éventuellement après le basculement en mode manuel. Aux yeux de la personne 20, ces pictogrammes apparaissent préférentiellement en superposition, c'est-à-dire en surimposition de la réalité de l'environnement extérieur. Comme expliqué ci-avant, cela est obtenu notamment en recourant à des dispositifs de vision tête haute, ou à tout autre procédé de réalité augmenté.

Optionnellement, cette sous-période BA est suivie d'une sous-période BB de la période B, dans laquelle la représentation symbolique n'est plus diffusée.

Alternativement, pendant toute la période B, la représentation symbolique 100 est diffusée. Cependant, on peut préférer que, pendant toute la période B, la représentation symbolique 100 ne soit pas diffusée.

A l'issue de la période B, le basculement en mode manuel est effectué, et la conduite manuelle est reprise par la personne 20 en pleine conscience de l'environnement extérieur 17, le risque d'une mauvaise réaction conduite manuelle étant particulièrement réduit. De préférence, en mode de conduite manuelle, notamment immédiatement après la phase de réengagement, la personne 20 est au poste de conduite du véhicule routier 1, ou pour le moins est embarquée dans le véhicule routier 1, de façon à être apte à porter son attention sur les images réelles et les représentations symboliques qui peuvent lui être soumises. En mode de conduite manuelle, notamment immédiatement après la phase de réengagement, le masque est maintenu en configuration de non-masquage, de sorte que la personne 20 reçoit l'image réelle non masquée et peut voir l'environnement extérieur du véhicule routier.

De manière générale, l'assistant de conduite 21 peut préférentiellement être qualifié d'interface-homme machine avancée pour la reconstruction dynamique et progressive de la conscience de l'environnement extérieur 17 pour la personne 20.

## Revendications

1. Véhicule routier (1) apte à transporter au moins une personne conductrice (20), le véhicule routier (1) comprenant :
- au moins un transmetteur (3, 5, 6, 7, 8) d'une image réelle (10) d'un environnement extérieur (17) du véhicule routier (1) à l'attention de la personne conductrice (20) ;
- un assistant de conduite (21), qui comprend :
o au moins un afficheur d'assistance (26, 27, 28) à l'attention de la personne conductrice (20) ;
o un automate de conduite (23) ;
o au moins un masque (24, 25) apte à évoluer entre :
▪ une configuration de masquage, dans laquelle l'image réelle (10) du transmetteur (3, 5, 6, 7, 8) est transmise masquée, ou n'est pas transmise, à l'attention de la personne conductrice (20) ; et
▪ une configuration de non-masquage, dans laquelle l'image réelle (10) du transmetteur (3, 5, 6, 7, 8) est transmise non-masquée à l'attention de la personne conductrice (20) ;
l'assistant de conduite (21) étant configuré pour basculer entre :
- un mode manuel dans lequel au moins une commande de conduite (16) du véhicule routier (1) est mise sous le contrôle de la personne conductrice (20) pour conduire le véhicule routier (1) ; et
- un mode automatique dans lequel la commande de conduite (16) est mise sous le contrôle de l'automate de conduite (23) pour conduire le véhicule routier (1) ;
l'assistant de conduite (21) étant configuré pour mettre en œuvre une phase de réengagement du mode manuel, immédiatement avant un basculement de l'assistant de conduite (21) en mode manuel, et alors que l'assistant de conduite (21) est encore en mode automatique, la phase de réengagement comprenant :
- une première période de temps (A), pendant toute laquelle le masque (24, 25) est maintenu en configuration de masquage, l'afficheur d'assistance (26, 27, 28) diffusant une représentation symbolique (100) de l'environnement extérieur (17), à l'attention de la personne conductrice (20) pendant au moins une partie de la première période de temps (A) ; et
- une deuxième période de temps (B) suivant la première période de temps (A) et précédant immédiatement le basculement de l'assistant de conduite (21) depuis le mode automatique vers le mode manuel, pendant toute laquelle le masque (24, 25) est maintenu en configuration de non-masquage.
**caractérisé en ce que** :
- lorsque l'environnement extérieur (17) comprend :
o un système de voies de circulation routière (9) sur lequel le véhicule routier (1) est positionné ; et
o au moins un objet d'attention (11, 12, 13, 14, 15), qui est présent sur le système de voies de circulation routière (9) et est choisi parmi : un véhicule routier tiers, une personne, un animal, un obstacle, et un élément de signalisation de la circulation routière appartenant au système de voie de circulation routière ;
- l'assistant de conduite (21) est configuré de sorte que la première période de temps (A) comprend :
o une première sous-période (AA), pendant laquelle la représentation symbolique (100) ne représente ni le système de voies de circulation routière (9) ni l'objet d'attention (11, 12, 13, 14, 15), ou n'est pas diffusée ; et
o une deuxième sous-période (AB), suivant la première sous-période, pendant laquelle la représentation symbolique (100) représente le système de voies de circulation routière (9) sans représenter l'objet d'attention (11, 12, 13, 14, 15).

2. Véhicule routier (1) selon la revendication 1, dans lequel l'assistant de conduite (21) est configuré pour que la phase de réengagement dure entre 1 et 30 secondes.

3. Véhicule routier (1) selon la revendication 2, dans lequel l'assistant de conduite (21) est configuré pour que la phase de réengagement dure entre 2 et 7 secondes.

4. Véhicule routier (1) selon l'une quelconque des revendications précédentes, dans lequel l'assistant de conduite (21) est configuré de sorte que la première période de temps (A) comprend une troisième sous-période (AC), suivant la deuxième sous-période (AB), pendant laquelle la représentation symbolique (100) représente à la fois le système de voies de circulation routière (9) et l'objet d'attention (11, 12, 13, 14, 15).

5. Véhicule routier (1) selon la revendication 4, dans lequel, lorsque l'environnement extérieur (17) comprend au moins deux objets d'attention (11, 12, 13, 14, 15), parmi lesquels un premier objet d'attention (14) et un deuxième objet d'attention (11, 12, 13, 15), l'assistant de conduite (21) est configuré pour que :
- au cours de la troisième sous-période (AC), la représentation symbolique (100) représente à la fois le système de voies de circulation routière (9) et le premier objet d'attention (14) sans représenter le deuxième objet d'attention (11, 12, 13, 15), et
- la première période de temps (A) comprend une quatrième sous-période (AD) suivant la troisième sous-période (AC), pendant laquelle la représentation symbolique (100) représente à la fois le système de voies de circulation routière (9), le premier objet d'attention (14) et le deuxième objet d'attention (11, 12, 13, 15).

6. Véhicule routier (1) selon l'une quelconque des revendications précédentes, dans lequel l'assistant de conduite (21) est configuré de sorte que la deuxième période de temps (B) comprend une cinquième sous-période (BA) au cours de laquelle l'afficheur d'assistance (26, 27, 28) continue de diffuser la représentation symbolique (100).

7. Véhicule routier (1) selon la revendication 6, dans lequel, au cours de la phase de réengagement, au moins pendant la deuxième période de temps (B), l'afficheur d'assistance (26, 27, 28) est configuré pour superposer, à l'attention de la personne conductrice (20) :
- en arrière-plan, l'image réelle (10) fournie par le transmetteur (3, 5, 6, 7, 8), et
- au premier plan, la représentation symbolique (100).

8. Véhicule routier (1) selon l'une quelconque des revendications précédentes, dans lequel l'assistant de conduite (21) est configuré pour que chaque sous-période (AA, AB, AC, AD, AE, BA, BB) dure entre 0,4 secondes et 2 secondes.

9. Véhicule routier (1) selon la revendication 8, dans lequel l'assistant de conduite (21) est configuré pour que chaque sous-période (AA, AB, AC, AD, AE, BA, BB) dure entre 0,5 secondes et 0,8 secondes.

10. Véhicule routier (1) selon l'une quelconque des revendications précédentes, dans lequel la commande de conduite (16) du véhicule routier (1) comprend au moins l'une des commandes suivantes :
- une commande (16) de gestion de la direction du véhicule routier (1),
- une commande de mise en accélération du véhicule routier (1), et
- une commande de mise en décélération du véhicule routier (1).

11. Méthode de réengagement de la conduite manuelle, mise en œuvre à l'aide d'un véhicule routier (1) conforme à l'une quelconque des revendications précédentes, méthode dans laquelle, avant un basculement de l'assistant de conduite (21) depuis le mode automatique vers le mode manuel, l'assistant de conduite (21) met en œuvre la phase de réengagement.

## Patentansprüche

1. Straßenfahrzeug (1), das geeignet ist, um mindestens eine fahrende Person (20) zu befördern, das Straßenfahrzeug (1) umfassend:
- mindestens einen Sender (3, 5, 6, 7, 8) eines realen Bildes (10) einer äußeren Umgebung (17) des Straßenfahrzeugs (1) zur Beachtung durch die fahrende Person (20);
- einen Fahrassistenten (21), der Folgendes umfasst:
o mindestens eine Assistenzanzeige (26, 27, 28) zur Beachtung durch die fahrende Person (20);
o einen Fahrautomaten (23);
o mindestens eine Maske (24, 25), die geeignet ist, um zwischen Folgendem zu wechseln:
▪ eine Maskierungskonfiguration, bei der das reale Bild (10) des Senders (3, 5, 6, 7, 8) zur Beachtung durch die fahrende Person (20) maskiert übertragen wird oder nicht übertragen wird; und
▪ eine Nicht-Maskierungskonfiguration, bei der das reale Bild (10) des Senders (3, 5, 6, 7, 8) unmaskiert zur Beachtung durch die fahrende Person (20) übertragen wird;
wobei der Fahrassistent (21) konfiguriert ist, um zwischen Folgendem umzuschalten:
- einem manuellen Modus, in dem mindestens eine Fahrsteuerung (16) des Straßenfahrzeugs (1) unter die Kontrolle der fahrenden Person (20) gebracht wird, um das Straßenfahrzeug (1) zu fahren; und
- einem automatischen Modus, in dem die Fahrsteuerung (16) unter die Kontrolle des Fahrautomaten (23) gebracht wird, um das Straßenfahrzeug (1) zu fahren;
wobei der Fahrassistent (21) konfiguriert ist, um unmittelbar vor einem Umschalten des Fahrassistenten (21) in den manuellen Modus und während der Fahrassistent (21) noch in dem automatischen Modus ist, eine Wiedereinschaltungsphase des manuellen Modus zu implementieren, die Wiedereinschaltungsphase umfassend:
- eine erste Zeitperiode (A), während der die Maske (24, 25) in der Maskierungskonfiguration gehalten wird, wobei die Assistenzanzeige (26, 27, 28) eine symbolische Darstellung (100) der äußeren Umgebung (17) zur Beachtung durch die fahrende Person (20) während mindestens eines Teils der ersten Zeitperiode (A) ausstrahlt; und
- eine zweite Zeitperiode (B), die auf die erste Zeitperiode (A) folgt und unmittelbar vor dem Umschalten des Fahrassistenten (21) von dem automatischen Modus in den manuellen Modus liegt, wobei die Maske (24, 25) während der gesamten Zeitperiode in der Nicht-Maskierungskonfiguration gehalten wird.
**dadurch gekennzeichnet, dass**:
- wenn die äußere Umgebung (17) Folgendes umfasst:
o ein System von Straßenverkehrswegen (9), auf dem das Straßenfahrzeug (1) positioniert ist; und
o mindestens ein Aufmerksamkeitsobjekt (11, 12, 13, 14, 15), das auf dem Straßenverkehrswegsystem (9) vorhanden ist und aus Folgendem ausgewählt ist: einem fremden Straßenfahrzeug, einer Person, einem Tier, einem Hindernis und einem Verkehrszeichen, das zu dem Straßenverkehrswegsystem gehört;
- der Fahrassistent (21) konfiguriert ist, sodass die erste Zeitperiode (A) Folgendes umfasst:
o eine erste Unterperiode (AA), während der die symbolische Darstellung (100) weder das Straßenverkehrswegsystem (9) noch das Aufmerksamkeitsobjekt (11, 12, 13, 14, 15) darstellt oder nicht verbreitet wird; und
o eine zweite Unterperiode (AB), die auf die erste Unterperiode folgt, während der die symbolische Darstellung (100) das Straßenverkehrswegsystem (9) darstellt, ohne das Aufmerksamkeitsobjekt (11, 12, 13, 14, 15) darzustellen.

2. Straßenfahrzeug (1) nach Anspruch 1, wobei der Fahrassistent (21) konfiguriert ist, damit die Wiedereinschaltungsphase zwischen 1 und 30 Sekunden dauert.

3. Straßenfahrzeug (1) nach Anspruch 2, wobei der Fahrassistent (21) konfiguriert ist, damit die Wiedereinschaltungsphase zwischen 2 und 7 Sekunden dauert.

4. Straßenfahrzeug (1) nach einem der vorhergehenden Ansprüche, wobei der Fahrassistent (21) konfiguriert ist, sodass die erste Zeitperiode (A) eine dritte Teilperiode (AC) umfasst, die auf die zweite Unterperiode (AB) folgt, während der die symbolische Darstellung (100) sowohl das Straßenverkehrswegsystem (9) als auch das Aufmerksamkeitsobjekt (11, 12, 13, 14, 15) darstellt.

5. Straßenfahrzeug (1) nach Anspruch 4, wobei, wenn die äußere Umgebung (17) mindestens zwei Aufmerksamkeitsobjekte (11, 12, 13, 14, 15) umfasst, wovon eines ein erstes Aufmerksamkeitsobjekt (14) und eines ein zweites Aufmerksamkeitsobjekt (11, 12, 13, 15) ist, der Fahrassistent (21) zu Folgendem konfiguriert ist:
- während der dritten Unterperiode (AC) stellt die symbolische Darstellung (100) sowohl das Straßenverkehrswegesystem (9) als auch das erste Aufmerksamkeitsobjekt (14) darstellt, ohne das zweite Aufmerksamkeitsobjekt (11, 12, 13, 15) darzustellen, und
- die erste Zeitperiode (A) umfasst eine vierte Unterperiode (AD), die auf die dritte Unterperiode (AC) folgt, während der die symbolische Darstellung (100) sowohl das Straßenverkehrswegesystem (9), das erste Aufmerksamkeitsobjekt (14) als auch das zweite Aufmerksamkeitsobjekt (11, 12, 13, 15) darstellt.

6. Straßenfahrzeug (1) nach einem der vorherigen Ansprüche, wobei der Fahrassistent (21) konfiguriert ist, sodass die zweite Zeitperiode (B) eine fünfte Unterperiode (BA) umfasst, während der die Assistenzanzeige (26, 27, 28) weiterhin die symbolische Darstellung (100) ausstrahlt.

7. Straßenfahrzeug (1) nach Anspruch 6, wobei während der Wiedereinschaltungsphase, zumindest während der zweiten Zeitperiode (B), die Assistenzanzeige (26, 27, 28) konfiguriert ist, um zur Beachtung durch die fahrende Person (20) Folgendes zu überlagern:
- im Hintergrund das reale Bild (10), das von dem Sender (3, 5, 6, 7, 8) bereitgestellt wird, und
- im Vordergrund die symbolische Darstellung (100).

8. Straßenfahrzeug (1) nach einem der vorherigen Ansprüche, wobei der Fahrassistent (21) konfiguriert ist, damit jede Unterperiode (AA, AB, AC, AD, AE, BA, BB) zwischen 0,4 Sekunden und 2 Sekunden dauert.

9. Straßenfahrzeug (1) nach Anspruch 8, wobei der Fahrassistent (21) konfiguriert ist, damit jede Unterperiode (AA, AB, AC, AD, AE, BA, BB) zwischen 0,5 Sekunden und 0,8 Sekunden dauert.

10. Straßenfahrzeug (1) nach einem der vorherigen Ansprüche, wobei die Fahrsteuerung (16) des Straßenfahrzeugs (1) mindestens eine der folgenden Steuerungen umfasst:
- eine Steuerung (16) zum Steuern der Richtung des Straßenfahrzeugs (1),
- einen Befehl zum Beschleunigen des Straßenfahrzeugs (1), und
- einen Befehl zum Abbremsen des Straßenfahrzeugs (1).

11. Verfahren zum Wiedereinschalten des manuellen Fahrens, das mittels eines Straßenfahrzeugs (1) nach einem der vorherigen Ansprüche implementiert wird, wobei in dem Verfahren vor einem Umschalten des Fahrassistenten (21) von dem automatischen Modus in den manuellen Modus der Fahrassistent (21) die Wiedereinschaltungsphase implementiert.

## Claims

1. A road vehicle (1) suitable for transporting at least one driver (20), the road vehicle (1) comprising:
- at least one transmitter (3, 5, 6, 7, 8) of a real image (10) of an external environment (17) of the road vehicle (1) to the driver (20);
- a driving assistant (21), which comprises:
o at least one assistance display (26, 27, 28) for the driver (20);
o an automatic driving unit (23);
o at least one mask (24, 25) able to move between:
▪ a masking configuration, in which the real image (10) of the transmitter (3, 5, 6, 7, 8) is transmitted masked, or not transmitted, to the driver (20); and
▪ a non-masking configuration, in which the real image (10) of the transmitter (3, 5, 6, 7, 8) is transmitted unmasked to the driver (20);
the driving assistant (21) being configured to switch between:
- a manual mode in which at least one driving control (16) of the road vehicle (1) is put under the control of the driver (20) to drive the road vehicle (1); and
- an automatic mode in which the driving control (16) is put under the control of the automatic driving unit (23) to drive the road vehicle (1);
the driving assistant (21) being configured to implement a manual mode re-engagement phase, immediately prior to the driving assistant (21) switching to manual mode, and while the driving assistant (21) is still in automatic mode, the re-engagement phase comprising:
- a first period of time (A), during which the mask (24, 25) is maintained in a masking configuration, the assistance display (26, 27, 28) displaying a symbolic representation (100) of the external environment (17) to the driver (20) during at least part of the first period of time (A); and
- a second period of time (B) following the first period of time (A) and immediately preceding the switching of the driver's assistant (21) from automatic to manual mode, during which the mask (24, 25) is maintained in the non-masking configuration.
**characterised in that**:
- when the external environment (17) comprises:
o a road lane system (9) on which the road vehicle (1) is positioned; and
o at least one object of attention (11, 12, 13, 14, 15), which is present on the road lane system (9) and is selected from: a third party road vehicle, a person, an animal, an obstacle, and a road traffic signal element belonging to the road lane system;
- the driving assistant (21) is configured so that the first time period (A) comprises:
o a first sub-period (AA), during which the symbolic representation (100) does not represent the road lane system (9) or the object of attention (11, 12, 13, 14, 15), or is not displayed; and
o a second sub-period (AB), following the first sub-period, during which the symbolic representation (100) represents the road lane system (9) without representing the object of attention (11, 12, 13, 14, 15).

2. The road vehicle (1) according to claim 1, wherein the driving assistant (21) is configured so that the re-engagement phase lasts between 1 and 30 seconds.

3. The road vehicle (1) according to claim 2, wherein the driving assistant (21) is configured so that the re-engagement phase lasts between 2 and 7 seconds.

4. The road vehicle (1) according to any one of the preceding claims, wherein the driving assistant (21) is configured such that the first time period (A) comprises a third sub-period (AC), following the second sub-period (AB), during which the symbolic representation (100) represents both the road lane system (9) and the object of attention (11, 12, 13, 14, 15).

5. The road vehicle (1) according to claim 4, wherein, when the external environment (17) comprises at least two objects of attention (11, 12, 13, 14, 15), of which a first object of attention (14) and a second object of attention (11, 12, 13, 15), the driving assistant (21) is configured so that:
- in the third sub-period (AC), the symbolic representation (100) represents both the road lane system (9) and the first object of attention (14) without representing the second object of attention (11, 12, 13, 15), and
- the first time period (A) comprises a fourth sub-period (AD) following the third sub-period (AC), during which the symbolic representation (100) represents both the road lane system (9), the first object of attention (14) and the second object of attention (11, 12, 13, 15).

6. The road vehicle (1) according to any one of the preceding claims, wherein the driving assistant (21) is configured such that the second time period (B) comprises a fifth sub-period (BA) during which the assistance display (26, 27, 28) continues to display the symbolic representation (100).

7. The road vehicle (1) according to claim 6, wherein, during the re-engagement phase, at least during the second time period (B), the assistance display (26, 27, 28) is configured to superimpose, for the attention of the driver (20):
- in the background, the real image (10) provided by the transmitter (3, 5, 6, 7, 8), and
- in the foreground, the symbolic representation (100).

8. The road vehicle (1) according to any of the preceding claims, wherein the driving assistant (21) is configured so that each sub-period (AA, AB, AC, AD, AE, BA, BB) lasts between 0.4 seconds and 2 seconds.

9. The road vehicle (1) according to claim 8, wherein the driving assistant (21) is configured so that each sub-period (AA, AB, AC, AD, AE, BA, BB) lasts between 0.5 seconds and 0.8 seconds.

10. The road vehicle (1) according to any of the preceding claims, wherein the driving control (16) of the road vehicle (1) comprises at least one of the following controls:
- a control (16) for managing the steering of the road vehicle (1),
- a control to accelerate the road vehicle (1), and
- a control to decelerate the road vehicle (1).

11. A method of re-engaging manual driving, implemented using a road vehicle (1) according to any of the preceding claims, wherein, prior to a switchover of the driving assistant (21) from automatic to manual mode, the driving assistant (21) implements the re-engagement phase.
